# EUROPEAN PATENT SPECIFICATION

(11) **EP 4 238 681 B1**
(45) Date of publication and mention of the grant of the patent: **11.12.2024**
(21) Application number: 22425009.2
(22) Date of filing: 01.03.2022
(51) Int. Cl.: B23K 11/31

(54) **WELDING GUN WITH AN ACTUATOR ON A FIXED ELECTRODE**
SCHWEISSPISTOLE MIT EINEM AKTUATOR AUF EINER FESTEN ELEKTRODE
PISTOLET DE SOUDAGE AYANT UN ACTIONNEUR SUR UNE ÉLECTRODE FIXE

(43) Date of publication of application: 06.09.2023
(73) Proprietor: Diakont S.r.l., 50025 Montespertoli (FI) (IT)
(72) Inventor: Fedosovskiy, Mikhail, 197022 Saint Petersburg (RU); Uvarov, Mikhail, 194352 Saint Petersburg (RU)
(74) Representative: Emmi, Mario

(56) References cited:
- DE-U1- 202008 013 882

## Description

### FIELD OF THE INVENTION

The present invention relates to a welding gun for resistance spot welding, such as known from DE 20 2008 013882 U1.

### BACKGROUND OF THE INVENTION

A welding gun is intended for resistance spot welding. Resistance spot welding became commonly used in the industry. For example, spot welding is used for connecting metal body parts in vehicle manufacturing. Welding guns generally have a first movable electrode driven by an electromechanical linear actuator (hereinafter, EMA) and a second electrode that remains stationary relative to the welding gun. The welding gun is located on an arm of an industrial manipulator (hereinafter, a robot), which is controlled by the controller of the robot. During configuration, a spatial coordinate of the end of the fixed electrode of the welding gun is determined, for example, by bringing the electrode to the plate without a gap between them and recording the current coordinate. Before welding, the robot is trained - with a control unit an operator brings the welding gun to the welding spot such that the second electrode touches one of the parts to be welded. During welding, the robot moves the welding gun to two or more parts to be welded fixed in the equipment such that the second electrode welding gun touches one of the parts to be welded at a right angle to the surface of this part to be welded. Then, in response to a command from the control system, e.g., of the robot, the EMA brings the first electrode at a high speed, preferably a maximum speed, to the parts to be welded, then the speed of movement of this electrode is reduced to a contact speed. After the movable electrode contacts one of the parts to be welded, the welding gun clamps the parts to be welded between the electrodes, and then electric current is passed through the electrodes, in particular, through caps on the ends thereof that contact the parts to be welded, and through the parts to be welded, which causes local heating, melts the metal in the clamped area and forms a weld nugget. After the welding current is no longer supplied, the metal cools and hardens, the parts become joined at the weld nugget and the welding gun opens. Several robots with welding guns for welding vehicle parts are joined into a welding workcell. It is important that an increase in the capacity of a welding workcell on a body line is facilitated by a reduction of the welding cycle duration which is directly influenced by the speed of movement of the electrodes of a welding gun.

To avoid the second electrode colliding with a part to be welded and damaging parts to be welded or the electrode, the welding gun needs to be brought to parts to be welded at a low speed, since the robot has high inertia. Accordingly, a smooth delivery of the electrode to parts to be welded takes time and, consequently, increases the welding duration which also includes the robot moving the welding gun.

In addition, when the welding gun compresses, the electrodes flex elastically under the force, wherein each of the electrodes flexes to a different degree, which displaces the contact point between the electrodes and the parts to be welded. Since there are parts to be welded fixed in the equipment between the electrodes, the displacement of the electrodes contact point causes the undesirable flexing and damage to the parts to be welded. Parts to be welded in the equipment are arranged with a certain tolerance, i.e., parts to be welded can be in different positions along an axis of the electrodes of the welding gun. In this case, the robot puts the welding gun in a position relative to parts to be welded, in which the fixed electrode should touch one of the parts to be welded, and not in the position in which the fixed electrode effectively touches one of the parts to be welded. The caps on the ends of the electrodes are subject to wear during welding from cycle to cycle. Uneven wear of the caps on two electrodes increases the displacement of the actual contact point from the expected point of contact between the electrodes and the parts to be welded. Compressing the welding gun with this position of the caps also leads to the flexing of the parts to be welded and to damage thereto. To avoid damaging the parts to be welded, various methods and devices are used to equalize forces on both electrodes, the so-called equalizing. Welding without equalizing leads to uneven forces on two electrodes and the bending of the parts to be welded. It should be considered that force that is too weak will lead to the molten metal from the center of the welding spot spilling between sheets to be welded from underneath the electrodes, consequently, the welding spot will be less robust. Conversely, applying force that is too strong increases the contact area of the metal sheets and reduces resistance in the welding spot, which reduces the heating of the metal in the welding spot and reduces the welding spot nugget. Thus, uneven forces on the electrodes reduces the welding quality.

An equalizing method disclosed in US7738996B2 includes moving, by a robot, a welding gun in space a distance that equals to elastic deformation of the welding gun, which corresponds to the predetermined force, when the parts to be welded are clamped, in order to avoid deforming the parts. With that, the displacement of the actual point of contact between the electrodes and the parts to be welded relative to the reference contact point is taken into account. The direction of the movement of the welding gun coincides with the longitudinal axis of the electrodes. However, this variant of equalizing increases the duration of the welding process, since the robot, as was mentioned above, has high inertia and, consequently, takes a long time to accelerate and slow down, which prevents the robot from achieving the speed of movement of the welding gun equal to the speed of movement of the first electrode. It can result in a situation, in which the robot is still moving the welding gun to a target coordinate, while the first electrode has already stopped, and the welding of the parts to be welded could have been already performed.

Welding gun configurations are known, comprising a second EMA located, for example, between a welding gun base by which the welding gun is attached to the robot and a part of the welding gun frame on which the first and second (fixed) electrodes are fastened. Such C-type and X-type welding guns are known from patent document US5988486A. In this welding gun construction, said EMA can move a part of the welding gun until the second electrode contacts the parts to be welded faster that the robot. For equalization, said EMA moves a part of the welding gun a distance equal to an amount of elastic deformation of the electrodes. However, due to the large weight of the welding gun part connected to the EMA rod, the acceleration and, consequently, the speed the EMA can develop are reduced. It is also important that the EMA, when positioned like this, is susceptible to damage in the case welding gun collides with obstacles while the robot is configured (trained). For example, an operator, with a control unit of a controller of the robot, can set the movement of the robot along the path that has an obstacle in the form of the equipment for the parts to be welded or another welding gun. In this case, a collision against the frame part being moved by the EMA will impact the EMA, which will cause it to break. It is possible to add various reinforcements for the EMA, for example, a radial support of the rod of this EMA as a guide that will take the impact, but it will not prevent damage caused by the impact along the EMA rod axis and also will increase the weight of the welding gun and inertia of the robot.

Furthermore, a welding gun construction is known from JP3319086B2, wherein each electrode, a first electrode 24 and a second electrode 25, drives a separate EMA, which allows performing equalization, i.e., achieving equal forces on each of the electrodes when the parts to be welded are clamped by the welding gun during welding. However, this construction tends to damage the EMA of the second electrode 25 when the welding gun collides with an obstacle. It should be noted that due to a significant length of the second electrode 25, which moves the EMA, a large bending moment is applied to the rod thereof, which is caused by the bend of this electrode when the welding gun is compressed. In addition, in order to open the welding gun, the EMA rod that moves the electrode 25 has to be extended, which further increases the lever at which a bending moment occurs. Furthermore, in this construction, the EMA moves the second electrode 25 that apparently has a substantial length and weight, which increases the acceleration time of the second electrode 25 and, consequently, increases the welding cycle duration. This welding gun is less rigid than a welding gun without the EMA that moves the second electrode 25, which requires the installation of an EMA rod guide for decreasing the welding gun bend. It increases the weight of the welding gun. Without a guide, due to lower rigidity, the stroke of the EMA rod that drives the second electrode 25 has to be increased, which also increases the weight of the welding gun due to the increase in the weight of the EMA. Increasing the weight of the welding gun increases its inertia, which reduces acceleration and, therefore, the speed that the robot on which the welding gun is mounted can achieve.

DE102012112547B4 discloses a welding gun construction with two electric magnets to which electrodes are attached, the electrodes clamping the parts to be welded in the welding gun. To enable the welding gun to open more (i.e., to enable a greater stroke of at least one of the electrodes of the welding gun), one of the electric magnets has to be moved by a linear actuator, to a rod of which linear actuator an electric magnet is attached. It increases the weight and size of these welding guns and reduces the ease of manufacturing due to more parts. Also, this construction requires more electronic components for controlling each actuator and electric magnet. The current consumed by the electric magnet is determined based on the target force which is determined by the feedback from a force sensor. The current consumed by the electric magnet changes depending on the heat rate of the electric magnet, which changes the ratio of the current to the force developed by the electric magnet, and, therefore, increases an error of the force developed by the electric magnet at set current. The increased error of the force makes additional adjustment of the current of the electric magnet necessary until the target force is reached. The process of adjusting the current also takes time. Recording and estimating the temperature of the electric magnet complicates the system, since it requires processing more parameters, and also does not provide for the stability of the force-current ratio during the operating life of the welding gun. Hence, the electric magnet needs to be calibrated more often in order to determine the ratio of the force on the electrode to the current consumed by the electric magnet. Thus, some of the drawbacks of these welding guns are reduced response time, increased welding cycle duration, more frequent maintenance, which reduces the performance of the welding workcell. It should be noted that it is impossible to set a predetermined speed to the electrode driven by the electric magnet. If current is supplied to the electric magnet when the electrode is a certain distance away from the part to be welded, the electrode will move toward the part to be welded and collide with it at a speed it will develop while passing said distance. The speed can be too high, and the electrode will damage the part to be welded. Thus, the welding gun needs to be brought to parts to be welded until the electrode touches the part to be welded using a robot, which reduces the performance of the welding workcell.

Therefore, there is an objective to provide a welding gun with a higher second electrode movement speed and improved protection of the EMA that moves the second electrode from damage caused by the welding gun colliding with obstacles while the robot is configured.

### SUMMARY OF THE INVENTION

To solve the indicated problem, a welding gun is proposed, which comprises a first electrode, a second electrode having a fixed part and a movable part, wherein the movable part of the second electrode and the first electrode are movable towards each other, an electromechanical linear actuator of the first electrode fixedly attached relative to the fixed part of the second electrode, wherein the electromechanical linear actuator of the first electrode comprises a first force sensor, wherein a rod of the electromechanical linear actuator of the first electrode is connected to the first electrode, and an electromechanical linear actuator of the movable part of the second electrode, comprising a housing, an electric motor, an inverted roller-screw gear for transforming rotary movement of the electric motor into translational movement of the rod of the electromechanical linear actuator of the movable part of the second electrode, a bevel gear for transferring rotation of the electric motor to the inverted roller-screw gear, and a position sensor used for determining a position of the movable part of the second electrode. An axis of the inverted roller-screw gear coincides with an axis of the rod of the electromechanical linear actuator of the movable part of the second electrode and is angled relative to an axis of the electric motor. The electromechanical linear actuator of the movable part of the second electrode is fixedly attached on the fixed part of the second electrode with a part of the housing of the electromechanical linear actuator of the second electrode, in which the electric motor is located. The rod of the electromechanical linear actuator of the movable part of the second electrode is connected to the movable part of the second electrode. The welding gun also comprises a second force sensor configured to measure force on the second electrode.

Since a movable part of an electrode is attached to the EMA rod of the movable part of the second electrode (hereinafter, the EMA of the second electrode), and the EMA of the second electrode is fixed on the fixed part of the second electrode by a part of the body of the EMA of the second electrode, wherein an inverted roller-screw gear and the electric motor are arranged at an angle to each other, and the weight of the movable part of the second electrode, which is moved by the EMA of the second electrode, can be significantly reduced. Consequently, the speed and acceleration said EMA achieves can be significantly increased. It allows shortening the welding cycle duration at the stage of bringing the movable part of the second electrode to the parts to be welded, when the robot brings the welding gun to the parts to be welded. Increasing the speed and acceleration of the movable part of the second electrode also speeds up the determination of a zero position of the second electrode and spatial coordinates of the welding gun, which reduces the duration of the welding gun configuration process at startup and also reduces the welding workcell stand still time during maintenance of the welding gun, for example, when the zero position of the second electrode is determined after worn caps are sharpened or replaced.

Also, since the inverted roller-screw gear and electric motor are not coaxial but angled to each other, the length of the EMA of the second electrode in the direction along the axis of the second electrode is reduced, which reduces the length of the protruding portion of the fixed part of the second electrode from the end of the electrode, as the EMA of the second electrode is arranged in the bent portion of the fixed part of the second electrode. It reduces the space taken up by the welding gun near the welding spot, which allows for welding in tight spaces and also reduces the risk of one welding gun colliding with another welding gun performing the welding in adjacent areas on the vehicle body in the same welding workcell. Moreover, the presence of a bevel gear for transferring rotation from the electric motor to the inverted roller-screw gear facilitates reduction of the size of the electric motor and, therefore, of the EMA, which is very important for the possibility of welding through working apertures in vehicle body parts and in places near bent portions of the parts (parts to be welded).

Providing a reducer as a bevel gear facilitates reduction in torque that needs to be developed by the electric motor to achieve a high acceleration of the second electrode of the welding gun. Thus, the size of the EMA of the second electrode is reduced. On the other hand, it allows increasing the acceleration of the second electrode and increasing the performance of the welding workcell, while maintaining the same size. It should be noted that the bevel gear can be made with various angles of inclination of axes of toothed gears to one another, which allows positioning the roller-screw gear and the electric motor not only at a right angle to each other, but also at a different angle, if the fixed part of the second electrode is arranged not at a right angle to the movable part of the second electrode, which is required for welding parts to be welded near bent portions thereof. For example, the fixed part of the second electrode can be arranged at an obtuse or acute angle to the movable part of the second electrode.

Due to the fact that both electrodes are movable in the suggested welding gun structure, wherein they can be set to move with the same speed, the electrodes can be brought to parts to be welded at the same time, rather than successively, which reduces the welding cycle duration.

Due to the fact that the EMA of the second electrode comprises an electric motor, a position sensor, and to the fact that a force sensor configured for measuring the force on the second electrode is mounted on the welding gun, a coordinate of the second electrode can be determined, at which coordinate this electrode touches one of the parts to be welded, and also a dependence of the position of the second electrode to the force on that electrode, i.e., the rigidity of the welding gun, can be determined. It allows moving the second electrode to the coordinate corresponding to the predetermined force while compensating for the bend of the welding gun (by equalization), caused by the compression thereof, the bend being determined in each welding cycle. Determining the rigidity of the welding gun also prevents the temperature of the EMA from affecting the accuracy of the force. Additionally, control in the position circuit allows speeding up the equalization process and, consequently, reducing the welding cycle duration. A force sensor on the second electrode of the welding gun also allows periodically check the force sensor in the first EMA without using outside force sensors which usually are mounted manually between the electrodes of the welding gun, which reduces the welding gun stand still time and increases the performance of the welding workcell.

Due to the fact that the EMA of the second electrode comprises an inverted roller-screw gear (hereinafter, the roller-screw gear) for transforming rotary movement of the electric motor into translational movement of the rod, the size of the second EMA that drives the second electrode can be reduced, which allows creating working apertures though which the welding gun or only the second electrode of the welding gun, of a smaller size, passes, and also welding in locations close to the bent portions of the parts to be welded, for example, at a right angle. It can reduce the size of the overlap of the parts to be welded, reduce their weight and, therefore, the weight of the vehicle.

Also, the level of protection of the EMA of the second electrode from damage from the welding gun colliding with an obstacle during, for example, the training of the robot is increased, since the movable part of the second electrode is short, and, consequently, a large bending moment applied to the rod of the EMA of the second electrode and, therefore, to the inverted roller-screw gear does not occur during an impact on the second electrode in the direction transversal to its axis. It should be noted that the risk of the welding gun colliding with an obstacle such that the impact is directed along the EMA of the second electrode axis is almost completely eliminated, which prevents the breakdown of the roller-screw gear of the EMA of the second electrode, which would cause production line stand still time.

Advantageously, an angle between the axes of the inverted roller-screw gear and the electric motor can be right, obtuse or acute.

Advantageously, the rod of the electromechanical linear actuator of the movable part of the second electrode can be coaxial or parallel to the movable part of the second electrode.

Advantageously, the movable part of the second electrode can be angled relative to the rod of the electromechanical linear actuator of the movable part of the second electrode.

Advantageously, the welding gun further can further comprises an anti-rotation assembly of the movable part of the second electrode and a channel for cooling fluid that cools the movable part of the second electrode,

Advantageously, the channel for cooling fluid that cools the movable part of the second electrode can be partially located in the anti-rotation assembly.

Supply channels for cooling fluid, such as water, to the second electrode are within the anti-rotation assembly, which not only reduces the size of the EMA of the second electrode, but also makes it possible not to use tubes for supplying cooling around the EMA, thus lowering the risk of damage thereto, which would cause the electrode and the EMA to overheat and the welding gun to break down. Furthermore, it reduces the heating of friction parts of the anti-rotation assembly, which increases their operating life and, therefore, the operating life of the welding gun. Advantageously, the cooling liquid supply channels pass in close proximity to the electric motor, which reduces the heating of the latter and reduces the size of the EMA to enable welding in locations close to the bent portions of the parts to be welded. The cooling of the EMA further increases the performance of the welding workcell, since the EMA can consume more current, therefore, can accelerate and decelerate faster without overheating.

It should be noted that the improved performance of the EMA of the second electrode reduces the welding gun stand still time during periodic check of the welding gun e.g. the check of the force sensor of the first EMA.

Advantageously, the anti-rotation assembly can comprises two tubes slidably contacting the sleeves and the channel for cooling fluid is partially located in the tubes and openings in the housing, wherein the tubes and said openings are parallel to the rod.

Advantageously, the anti-rotation assembly can comprises two projections slidably contacting the housing and the channel for cooling fluid is partially located in the tubes and openings in said projections, wherein the tubes and said openings are parallel to the rod.

Advantageously, the electromechanical linear actuator of the first electrode can be fixedly attached relative to the fixed part of the second electrode.

In another embodiment, advantageously, the fixed part of the second electrode is can be angled relative to the movable part of the second electrode.

Advantageously, the movable part of the second electrode is can be coaxial or parallel to the first electrode.

In another embodiment, advantageously, the movable part of the second electrode can be angled relative to the first electrode.

Advantageously, the movable part of the second electrode can comprise a mounting base having cylindrical projection, wherein the movable part of the second electrode and the fixed part of the second electrode are connected to each other using the mounting base.

Advantageously, the second force sensor can comprise a resistive-strain sensor or a piezo-electric force sensor mounted to a surface of the fixed part of the second electrode.

Advantageously, the welding gun can comprise a control system having a computation unit to calculate positions of the first electrode and the movable part of the second electrode.

### BRIEF DESCRIPTION OF THE DRAWINGS

Fig. 1 shows a welding gun in a closed and opened state (side view) according to an embodiment of the present invention.
Fig. 2 shows a second electrode and an EMA (cross-sectional side view) of a movable part of a second electrode of the welding gun according to an embodiment of the present invention.

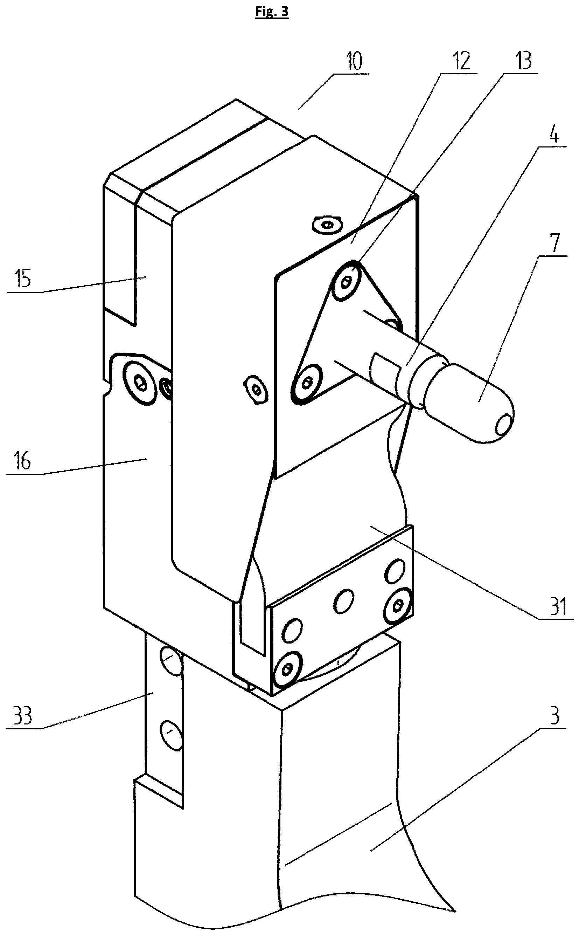

Fig. 3 shows an isometric view of the second electrode and the EMA of the movable part of the second electrode of the welding gun according to an embodiment of the present invention.
Fig. 4 shows channels for cooling a cap of the second electrode and the EMA of the movable part of the second electrode of the welding gun (part-sectioned side view) according to an embodiment of the present invention.
Fig. 5 shows an embodiment of the EMA of the movable part of the second electrode (cross-sectional side view) with an anti-rotation assembly having a spline shaft.
Fig. 6 shows an embodiment of the EMA of the movable part of the second electrode (part-sectioned side view) with water channels partially arranged in the anti-rotation assembly.
Fig. 7 shows an embodiment of the EMA of the movable part of the second electrode (part-sectioned side view) with the anti-rotation assembly in the form of projections on a transition piece to which the movable part of the second electrode is attached.

### DESCRIPTION OF THE PREFERRED EMBODIMENTS

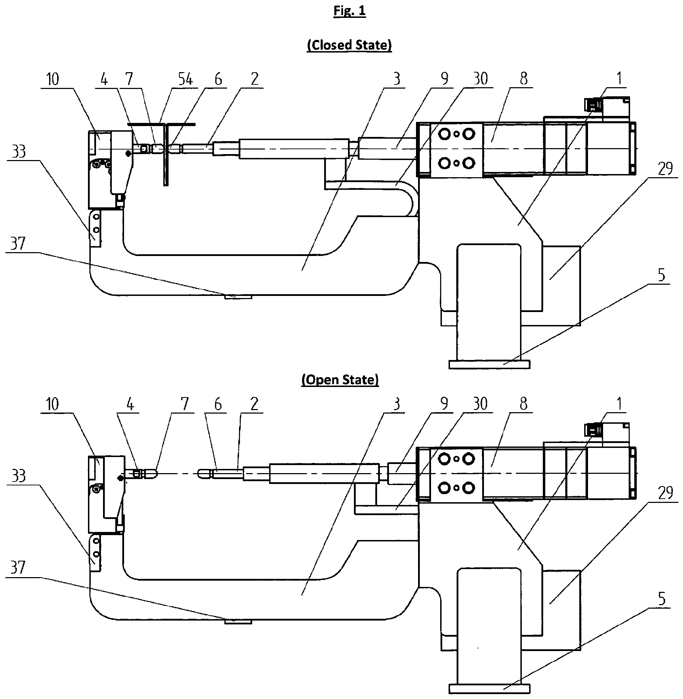

Fig. 1 shows a welding gun comprising a frame 1, a first electrode 2 (hereinafter, the electrode 2) and a second electrode having a fixed part 3 of the second electrode and a movable part 4 of the second electrode (hereinafter, the electrode 4). The welding gun is fixedly attached on a movable arm of a six-axis robot (not shown in the drawings) by a flange 5 and mounting screws (not shown in the drawings). An EMA 8 of the first electrode, to a rod 9 of which the first electrode 2 is fixedly attached, is fixedly mounted on the frame 1 of the welding gun. The EMA 8 of the first electrode comprises an electric motor (not shown in the drawings), a roller-screw gear (not shown in the drawings) and a position sensor (not shown in the drawings). It should be noted that any other transmission that transforms rotational movement of the electric motor into translation movement of the EMA rod can be used instead of the roller-screw gear, for example, a ball screw. Also, the EMA 8 of the first electrode can be a linear electric motor. The rod of the EMA 8 of the first electrode is connected to a moving reciprocating element of the roller-screw gear - a roller-screw gear screw (not shown in the drawings), which achieves reciprocating movement of the electrode 2. The EMA 8 of the first electrode comprises a force sensor (not shown in the drawings) configured to measure force on the first electrode 2.

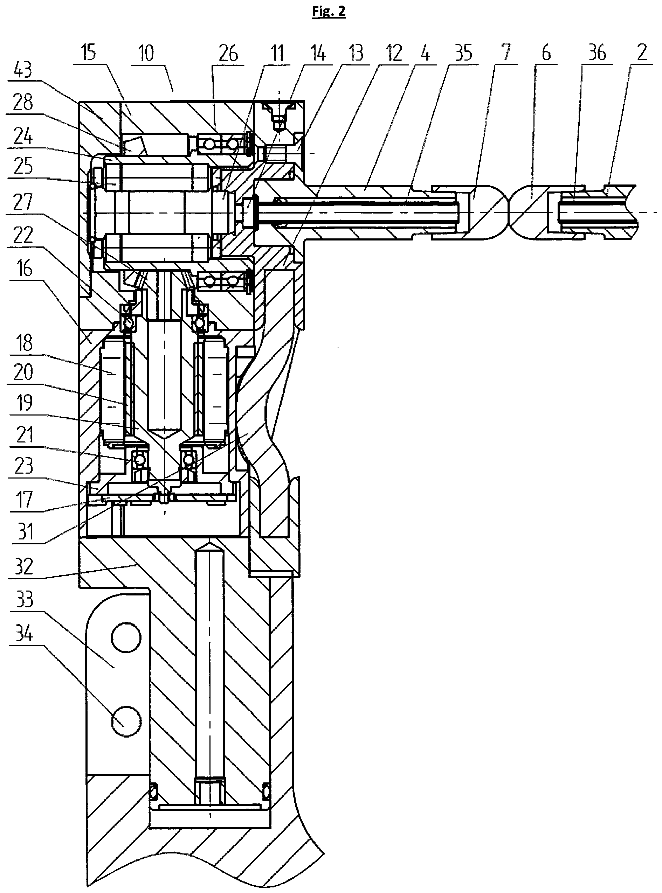

Caps 6 and 7 are mounted at the ends of the electrodes of the welding gun, and these caps 6 and 7 contact the parts 54 to be welded. For simplicity, the contact between the caps 6, 7 and the parts 54 to be welded is referred to as the contact of the electrode 2 and the electrode 4 with the parts 54 to be welded. The second electrode has the fixed part 3 fixedly mounted on the frame 1 of the welding gun. The EMA 10 of the second electrode is fixedly attached on the fixed part 3 of the second electrode. The rod 11 of the EMA 10 of the second electrode (Fig. 2) is fixedly attached to the electrode 4 coaxial to the first electrode 2. In the suggested embodiment, the movable part 4 of the second electrode is connected to the rod 11 of the EMA through a transition piece 12 to make it easy to replace the movable part 4 of the second electrode due to wear of a retaining cone on which the cap 7 is mounted. The electrode 4 is connected to the transition piece 12 with mounting screws 13. The transition piece 12 is connected to the rod 11 with a mounting screw 14 coaxial to the rod 11. To improve robustness of the connection between the rod 11 and the transition piece 12, longitudinal teeth that cut into the smooth surface of the cylindrical opening in the transition piece 12 causing this surface to deform are provided on the rod 11. In the suggested embodiment, the rod 11 is coaxial to the electrode 4. However, to weld the parts 54 to be welded in locations near to the bent portions of the parts 54 to be welded at a right angle, the electrode 4 may be slightly eccentric relative to rod 11, which eccentricity will allow for the desired operating life of the EMA 10 of the second electrode. It should be noted that in order to reduce working apertures in vehicle body parts, the electrodes 2 and 4 may be non-coaxial to each other, but, for example, be angled relative to each other. The electrodes 2 and 4 can be also not coaxial relative to each other if the welding spot of the parts 54 to be welded is too close to the bent portions of the parts 54 to be welded to prevent the welding gun from hitting the parts 54 to be welded and damaging the latter. In this case, the rod 11 is angled with respect to the electrode 4. The EMA 10 of the second electrode, the cross-section of which is shown in Fig. 2, comprises an electric motor, an inverted roller-screw gear, a bevel gear and a position sensor 17 within housings 15 and 16. The electric motor is comprised of a stator 18 fixed on an inner surface of an opening in the housing 16 and a rotor 19 having permanent magnets 20 which are fixedly attached on a surface of the rotor 19. The rotor 19 is mounted on two bearing supports 21 and 22, which are radial bearings but also can be other known bearings configured to receive load, such as needle bearings. A shaft of the position sensor 17, which is an inductive encoder, is fixed on the rotor 19. The position sensor also can be an optical encoder or a resolver, or any other known position sensor, which is used to determine the angular position of the rotor 19 of the electric motor. The position sensor 17 is fixed on a transition part 23, which is fixed to the housing 16. The position sensor 17 and the stator 18 are connected to the control system of the EMA 10 of the second electrode by cables (not shown in the drawings), and the control system can be performed as a frequency converter (not shown in the drawings). The frequency converter receives signals from the position sensor 17 and forms supply voltage of the stator 18.

The roller-screw gear comprises a nut 24 having internal threading, rollers 25 with external threading, and a part of the rod 11 on which a portion with external threading is positioned. In another embodiment, the rod 11 can be comprised of two separate parts, a roller-screw gear screw with a portion of external thread and a rod. When the nut 24 rotates, the rollers 25 roll around the rod 11 in planetary motion and move together with the rod 11 along the axis of the nut 24. The rod 11 of the EMA 10 of the second electrode is fixedly connected to the screw. Thus, the electrode 4 and the rod 11 moves in a reciprocating manner within the stroke restricted by the length of the internal threading of the nut 24. The nut 24 is arranged to rotate in a bearing support, which represents two radial thrust bearings 26. A bevel gear is configured to transfer the rotary movement from the rotor 19 of the electric motor to the nut 24. The bevel gear is configured to transfer rotary movement and torque from the rotor 19 of the electric motor to the nut 24 and also to position the nut 24 and the rotor 19 such that their axes are perpendicular to each other. Generally, the fixed electrode of the welding gun has several bends. Arranging the roller-screw gear and the electric motor at an angle to each other allows placing the EMA in the bent portion of the fixed electrode without substantially increasing the length of the welding gun. In other words, this arrangement of the roller-screw gear and the electric motor reduces the length of the EMA 10 of the second electrode in the direction along the axis of the electrode 4, which reduces the distance from the end of the electrode 4 to an outer protruding portion of the fixed part 3 of the second electrode. This feature reduces the space the welding gun takes up near a welding spot, which lowers the risk of one welding gun colliding with another welding gun performing welding in adjacent areas on a vehicle body in one welding wok cell. The toothed gears 27 and 28 are engaged with each other and transfer the rotary movement and torque from the rotor 19 of the electric motor to the nut 24. The reduction ratio of the bevel gear is selected such as to provide the desired linear speed of movement of the electrode 4 and the force on that electrode, while maintaining a small size of the electric motor and small dimensions of the EMA 10 of the second electrode. It is important that, depending on the configuration of parts 54 to be welded, the welding gun has a corresponding shape of the fixed part 3 of the second electrode, e.g., arranged at an acute or obtuse angle to the movable part of the second electrode. In this case, the toothed gears 27 and 28 have the same angle between the axes as the fixed part 3 of the second electrode and the electrode 4. It minimizes the size of the protruding portion of the welding gun.

It should be noted that the stroke of the rod 11 of the EMA 10 of the second electrode is significantly less than the stroke of the EMA 8 of the first electrode, since the EMA 10 of the second electrode moves the second electrode 4 only over a small distance. This is the distance that is formed between the end of the electrode 4 and one of the parts 54 to be welded when the robot brings the welding gun to the parts 54 to be welded. The distance is selected with consideration of the tolerance for the parts 54 to be welded in the equipment.

The welding current is supplied to the electrodes 2 and 4 using a welding transformer 29, which is controlled by a welding controller (not shown in the drawings). Current from the welding transformer 29 is supplied to the first electrode 2 via a current lead 30, the ends of which are fixed on the first electrode and on a current-conducting element (not shown in the drawings) connected to the welding transformer 29. The electrode 4 receives the welding current through the fixed part 3 of the second electrode connected to the welding transformer 29 and along a current lead 31, the ends of which are fixed on a mounting base 32 and the transition piece 12. The current leads 30 and 31 are made of a set of thin copper sheets for providing flexibility and avoiding additional load on the EMA 8 of the first electrode and the EMA 10 of the second electrode when both electrodes move. The mounting base 32 is configured to be connected with the fixed part 3 of the second electrode. In the suggested embodiment, the mounting base 32 has a cylindrical projection. This connection of the parts of the fixed electrode is typical for welding guns of known constructions that have a single movable electrode 2. This feature provides for modernization of this welding gun by further fitting them with the EMA for moving the second electrode 4 without changing the main part of the welding gun construction. The mounting base 32 is clamped with a clamp 33 incorporated into the fixed part 3 of the second electrode of the welding gun. The clamp 33 is compressed with mounting screws 34, which fixedly fasten the mounting base 32 relative to the fixed part 3 of the second electrode accordingly. Due to the frictional fixation of the housing of the EMA 10 of the second electrode relative to the fixed part 3 of the second electrode, the electrode 4 can be placed coaxially to the first electrode 2 during assembly. There is a projection on the fixed part 3 of the second electrode instead of on the mounting base 32 of a flattened surface coupled to this projection. Due to this, the electrode 4 takes a precise angular position during welding gun assembly. The mounting base 32 can be made without the projection such that the angular position of the electrode 4 can be adjusted so that the end thereof coincides with the end of the electrode 2. The mounting base 32 is connected to the housing 16 with mounting screws (not show in the drawings) and is replaceable to allow mounting the electrode 4 with the EMA 10 of the second electrode on the welding gun, which has the mounting area for the electrode 4 of different diameters and forms. It should be noted that the electrode 2, the fixed part 3 of the second electrode, the electrode 4, the caps 6 and 7, and the transition piece 12 are made of a current-conducting material, such as copper.

There is a force sensor 37, which is a resistive-strain sensor adhered to the surface of the fixed part 3 of the second electrode so that the former deforms and the resistance thereof changes when the fixed part 3 of the second electrode bends. The force sensor 37 is calibrated on the welding gun by compressing an outer force sensor, which is placed between the electrodes 2 and 4 during calibration, and plotting the ratio of the force on the outer force sensor to a signal of the force sensor 37. The force sensor 37 can be also presented as a piezoelectric force sensor mounted to the fixed part 3 of the second electrode with mounting screws. The signal of the force sensor 37 is transmitted through a cable (not shown in the drawings) to a frequency converter that controls the EMA 10 of the second electrode. In another embodiment, the force sensor 37 is positioned within the EMA.

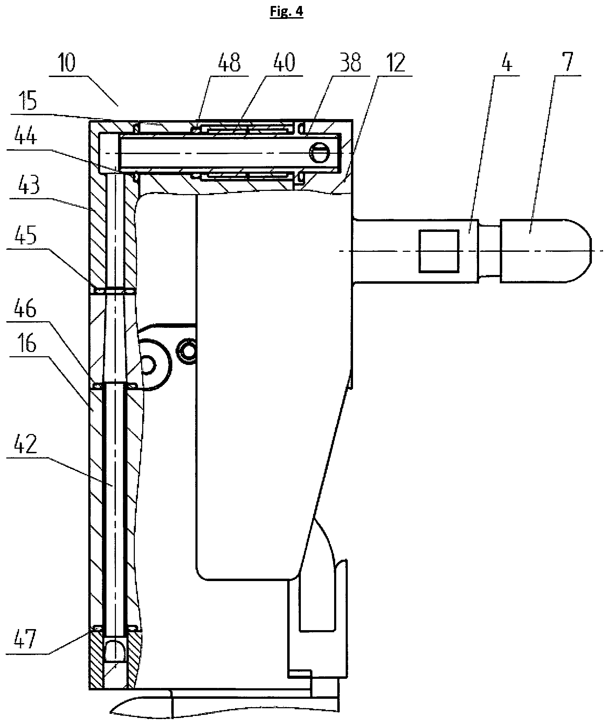

The caps 6 and 7 heat up during welding of the parts 54 to be welded. The caps are cooled with water cooling. For this, within the electrode 4, there is a channel in the form of a longitudinal aperture in the electrode 4 and a tube 35, through which water passes. There is also a similar channel and a tube 36 for water inside the first electrode 2. A channel and a cooling liquid flow tube pass within the mounting base 32. To cool the cap 7, the water enters through the first channel formed inside the fixed part 3 of the second electrode (not shown in the drawings), then through the first opening in the mounting base 32 (Fig. 4), then through one of the tubes 42 in the housing 16, then through the first opening in the housing 15, then through a tube 38 which is in communication with the first opening of the housing 15, then through the first opening in the transition piece 12 (not shown in the drawings), then through the tube 35. After that, the water enters the second opening of the transition piece 12 through the internal volume of the cap 7 along the channel in the opening of the electrode 4. Then, heated by the heat of the cap 7, the water passes through the second tube 38 which is in communication with the second opening in the transition piece 12, then through the second opening in the housing 15, then through the second tube 42 (not shown in the drawings) in the housing 16, then through the second opening in the mounting base 32 into the second channel inside the fixed part 3 of the second electrode. To improve the ease of manufacturing of the water flow openings, the housing 15 can be comprised of a main part and a cover 43, between which rubber sealing rings 44 and 45 are arranged to seal the channels. The cover 43 is attached to the housing 15 with mounting screws (not shown in the drawings). The joint of the housings 15 and 16 is protected from leaks in the area of the tube 42 by rubber sealing rings 46 and 47. The tubes 38 are protected from leaks by rubber rings 48. The tubes 38 are fixedly mounted on the transition piece 12 e.g., with a press fit achieved by providing the tubes 38 with a diameter slightly exceeding the diameter of the opening for receiving them in the transition piece 12. The tubes 38 move together with the transition piece 12 and the electrode 4 relative to the housing 15. To reduce friction when the tube 38 moves, sleeves 40 are provided through which the tubes 38 are arranged to pass. It should be noted that the channels arranged for water to flow to the cap 7 and back from it are laid inside the tubes 38 that do not exceed the dimensions of the EMA 10 of the second electrode, which eliminates the need to provide the water flow tubes outside the EMA 10 of the second electrode, which tubes can be damaged when the welding gun collides with an obstacle during robot training.

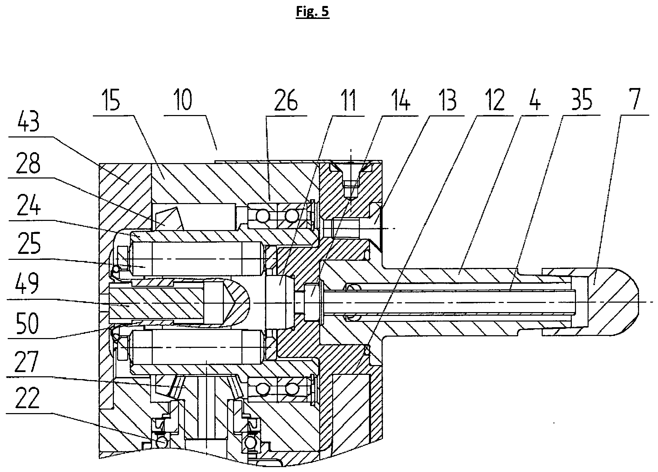

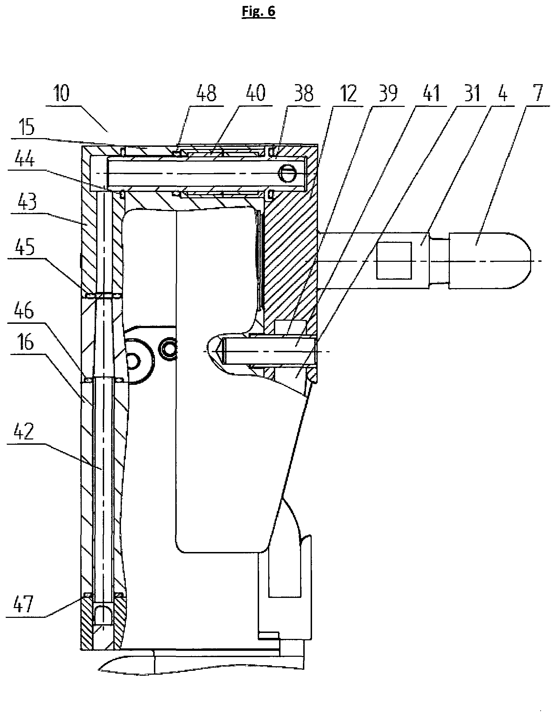

Optionally, in order to prevent the nut 24 and the rod 11 of the EMA 10 of the second electrode from rotating together and to achieve linear movement of the rod 11, the EMA 10 of the second electrode comprises an anti-rotation assembly. In one of the embodiments, the anti-rotation assembly is a current lead 31, which can bend in the direction along the axis of the electrode 4 but is sufficiently rigid in the direction across the axis of the electrode 4, which causes the rod 11 to remain in the same axial position and achieves translation movement of the rod 11. In another embodiment shown in Fig. 5, the anti-rotation assembly is comprised of a spline shaft 49 fixedly attached on the cover 43, and longitudinal slots 50 in the opening of the rod 11. The slots 50 mate with the longitudinal slots on the spline shaft 49. Thus, linear movement of the rod 11 and, consequently, of the electrode 4 is achieved. It is important that, according to another embodiment (Fig. 6), when the tubes 38 are sufficiently robust, i.e., if the tubes have a sufficient diameter and a wall thickness to receive torque applied to the rod 11, the anti-rotation assembly is comprised of two tubes 38 and sleeves 40. The tubes slidably contact the sleeves 40. The tubes 38 are fixedly attached to the transition piece 12 and are parallel to the rod 11. The water passing through the tubes 38 improves the cooling of the sleeves 40, which reduces the amount of wear thereof and increases the operating life of the anti-rotation assembly and, therefore, the operating life of the welding gun.

To increase the maximum force of the EMA 10 of the second electrode, the anti-rotation assembly has to be reinforced, since the rod 11 receives increased torque. For this, in another embodiment, cylindrical rods 41 configured to be received in the openings of the sleeves 39 are fixedly attached on the housing 15. The sleeves 39 are pressed in the openings in the transition piece 12, and the rods 41 have the form of pins and are pressed into the housing 15. At the same time, the diameter of the rods 41 is slightly less than the internal diameter of the sleeves 39 to allow them to move freely relative to each other parallel to the axis of the rod 11. In another embodiment, the rods 41 may be connected to the housing 15 through threading on the surface thereof and a threaded opening in the housing 15. The transition piece 12 moves together with the tubes 38 and sleeves 39 relative to the sleeves 40 and the rods 41, respectively, wherein the rods 38 and the sleeves 39 contact the sleeves 40 and the rods 41 across the entire stroke of the rod 11 and of the transition piece 12 and the electrode 4, respectively. Thus, the rod 11, the transition piece 12 and the electrode 4 are fixed around their axis relative to the housing of the EMA 10 of the second electrode, and their reciprocating movement is achieved.

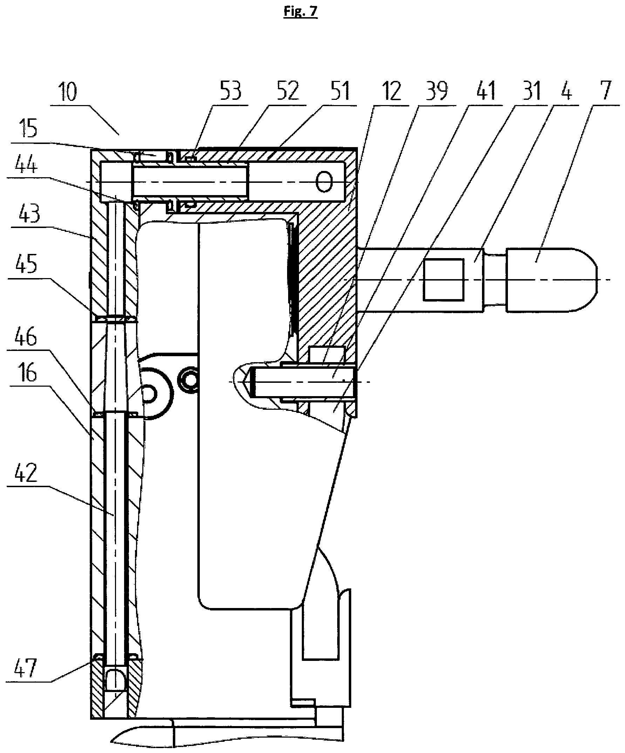

As stated above, in an embodiment, the electrode 4 can be arranged at an angle to the electrode 2, and the rod 11 can be arranged at an angle to the electrode 4, correspondingly. In this case, when the parts are welded, a radial (lateral) load occurs that acts on the electrode 4. The radial load acting on the electrode 4 also occurs when the welding gun collides with an obstacle, if the collision impacts the electrode 4, for example, when training the robot. The tubes 38 and the rods 41 in corresponding embodiments take the radial load to prolong the operating life of the roller-screw gear. Due to the fact that the short length of the electrode 4 prevents forming of a large bending moment acting on the electrode 4, the tubes 38, the sleeves 40, the rods 41, the sleeves 39 and parts of the roller-screw gear, the size of said parts and units, as well as the size of coupling elements of the transition piece 12 and the electrode 4 can be reduced and, therefore, the size of the EMA 10 of the second electrode can be reduced. In another embodiment shown in Fig. 7, the transition piece 12 on the end surface facing the housing 15 has two projections 51. Each projection 51 has an opening parallel to the tubes 52 fixed in the housing 15, wherein said opening is slightly larger than the tube 52 to allow them to move freely relative to each other parallel to the axis of the rod 11. The water is supplied to and drawn from the cap 7 through the tubes 52. The tubes are sealed with sealing rings 53. The projections 51 slidably contact the housing 15 so that the transition piece 12 can freely move parallel to the axis of the rod 11 but cannot rotate around own axis. Thus, the transition piece 12 and the electrode 4 in this embodiment are prevented from rotating to enable linear movement of the electrode 4. The wear-resistant pads (not shown in the drawings) are placed between projections 51 and the housing 15. The improved cooling of the said pads because of water passing through the openings in projections 51 decreases the wear of said pads. In case of increased torque required for increased force on the electrode 4, rods 41 fixed on the housing 15 and the sleeves 39 fixed on the transition piece 12 are further provided, where the rods 41 and the sleeves 39 are linearly movable relative to each other.

The EMA 8 of the first electrode is controlled by a separate frequency converter but can be controlled by the same frequency converter as the EMA 10 of the second electrode, if it is capable of connecting to and controlling at least two EMAs, for example, in a two-channel implementation. A signal from the force sensor of the EMA 8 of the first electrode is supplied to the frequency converter.

The suggested welding gun operates as follows. When configuring the robot, an operator, using a control unit of the robot controller, moves the welding gun to a testing plate (a steel plate fixedly mounted relative to the robot) such that the electrode 4 is facing the testing plate, is perpendicular to the testing plate and is at a distance from the nearest surface not exceeding the stroke length of the rod of the EMA 10 of the second electrode. At the same time, the rod 11 is fully retracted, which minimizes the risk of damaging the EMA 10 of the second electrode when the welding gun collides with an obstacle, such as the equipment with parts 54 to be welded or another welding gun. With the rod 11 fully retracted, the gap between the housing 15 and the transition piece 12 disappears, which causes the force that may be applied to the electrode 4 upon impact to be transferred to the housing 15 and not to the threaded portion of the rod 11, other details of the roller-screw gear or bearings 26. In response to a command from the operator, the controller records the current spatial coordinate of the welding gun in a controller memory. Then the operator sends a command to move the electrode 4 via the control unit. The stator 18 receives supply voltage from the frequency converter, wherein a rotating magnetic field is generated in the stator, which engages the rotor 19 and, thus, rotates the toothed gear 27. The toothed gear 27 drives the toothed gear 28 and the nut 24. When the nut 24 rotates, the rollers 25 engaged with the internal threading thereof roll in planetary motion around the threaded portion of the rod 11 and extend together with the rod 11 and the electrode 4. The electrode 4 moves towards the testing plate until it contacts the latter, wherein the time of contact is determined based on a signal from the force sensor 37, which changes when the force starts acting on the electrode 4. Using the position sensor 17, a coordinate of the electrode 4 is determined, in which the signal from the force sensor 37 achieved a pre-determined force, the value of which can be used to conclude that the electrode 4 touched the testing plate. When this force is reached, the electrode 4 stops. The distance which the electrode 4 has passed from the coordinate of the welding gun is added to the coordinate of the welding gun recorded earlier along the axis along which the electrode 4 has moved. The resulting coordinate is a coordinate of the end of the electrode 4 (Tool Center Point) with the rod 11 fully retracted relative to the robot. Thus, a spatial position of the welding gun relative to the robot becomes known, and a zero position of the electrode 4 is determined. Then, the spatial coordinate of the welding gun needs to be determined when the welding gun is brought to each welding spot intended to be welded by this welding gun. The process is performed in the same way as the process of determining the coordinate of the end of the electrode 4 and the zero position thereof, except the electrode 4 touches one of the parts 54 to be welded instead of the testing plate. By moving the electrode 4 instead of the welding gun and due to the small weight of the electrode 4, the configuration process of the welding gun is performed faster. It reduces the cost of configuring the welding gun, which is particularly relevant for vehicle factories, which use hundreds of welding guns..

To weld the parts 54 to be welded, a welding workcell robot brings the welding gun to the welding spot placing the welding gun such that the electrode 4 is facing one of the parts 54 to be welded, wherein the electrode 4 is perpendicular to the parts 54 to be welded. The stator 18 receives supply voltage from the frequency converter, wherein a rotating magnetic field is generated in the stator, which engages the rotor 19 and, thus, rotates the toothed gear 27. The toothed gear 27 drives the toothed gear 28 and the nut 24. When the nut 24 rotates, the rollers 25 engaged with the internal threading thereof roll in a planetary motion around the threaded portion of the rod 11 and extend together with the rod 11 and the electrode 4. The electrode 4 moves towards the parts 54 to be welded until it contacts the latter, and this time of contact is determined based on a signal from the force sensor 37, which changes when the force starts acting on the electrode 4. However, the electrode 4 can begin moving before the full stop of the robot that moves the welding gun in order to reduce the welding cycle duration. After this, the frequency converter moves the electrode 2 coupled to the EMA 8 of the first electrode towards the parts 54 to be welded, at first, at a high speed and, starting from a certain coordinate at which the electrode 2 still does not contact the parts 54 to be welded, at a reduced speed that prevents damage to the parts 54 to be welded upon a collision with the electrode 2.

It should be noted that it is possible to start moving the electrode 2 to the parts 54 to be welded when the electrode 4 is moving to the part to be welded to shorten the welding cycle duration. Then, the electrode 2 contacts the parts 54 to be welded and the clamping of the parts 54 to be welded by the welding gun between the electrode 4 and the electrode 2 begins. When the parts 54 to be welded are clamped, both electrodes are moved at the same speed. In response to a signal from the position sensors of the EMA 8 of the first electrode and the EMA 10 of the second electrode, the ratio of the force on the electrodes of the welding gun to the position of these electrodes (a signal from the position sensors) is determined, and the coordinate of each electrode, at which the preset force will be reached in the welding cycle, is predicted. The electrodes 2 and 4 stop at the preset coordinates, and the control system checks if the force is reached based on the signal from the force sensor 37 and the force sensor of the EMA 8 of the first electrode. Then, the welding controller supplies current to the electrodes 2 and 4 through the welding transformer 29, and the welding of the parts 54 to be welded is performed. After the welding is complete, the EMA 8 of the first electrode and the EMA 10 of the second electrode move the electrodes 2 and 4 away from the welded parts. The robot then moves the welding gun to the next welding spot.

In the course of welding, the caps 6 and 7 wear out and a procedure for restoring the shape thereof, such as sharpening, is performed. After several sharpening procedures, the caps 6 and 7 become extremely short, and the caps are replaced. In this case, the procedure of determining the coordinate of the end of the electrode 4 should be repeated. Therefore, not only the configuration at startup time of the welding gun is reduced, but also time on the welding gun maintenance is saved, therefore, inefficient stand still time of the welding workcell is reduced.

Also, an embodiment is possible, in which a control system is presented by a controller (not shown in the drawings) and a two-channel frequency converter or two frequency converters. A computation unit is integrated in the controller to calculate a position of the electrodes 2 and 4. This control system avoids redundancy of the calculation functions in the frequency converters and simplifies said frequency converters. The functionality of this controller may be also performed by a robot controller.

It should be noted that the suggested welding gun can be stationary arranged, i.e., fixedly attached to, e.g., a base fixed on the floor of the manufacturing facility, and the parts 54 to be welded may be brought to them using a robot having equipment, on the moving axis thereof, for capturing these parts to be welded.

The present invention is not meant to be limited by the particular embodiments disclosed in the description by way of example, and the present invention includes all possible modifications and alternative embodiments falling within the scope of the present invention defined in the accompanying claims.

## Claims

1. A welding gun comprising:
a first electrode (2);
a second electrode having a fixed part (3) and a movable part (4), wherein the movable part (4) of the second electrode and the first electrode (2) are movable towards each other;
an An electromechanical linear actuator (8) of the first electrode, wherein the electromechanical linear actuator (8) of the first electrode (2) comprises a first force sensor, wherein a rod (9) of the electromechanical linear actuator (8) of the first electrode is connected to the first electrode (2); and **characterized in that** the said welding gun further comprises:
an electromechanical linear actuator (10) of the movable part (4) of the second electrode, the said electromechanical linear actuator (10) of the movable part (4) comprising:
- a housing (15, 16);
- an electric motor;
- an inverted roller-screw gear for transforming rotary movement of the electric motor into translational movement of the rod (11) of the electromechanical linear actuator (10) of the movable part (4) of the second electrode;
- a bevel gear (27, 28) for transferring rotation of the electric motor to the inverted roller-screw gear;
- wherein an axis of the inverted roller-screw gear coincides with an axis of the rod (11) of the said electromechanical linear actuator (10) of the movable part (4) of the second electrode and with said axis of the inverted roller-screw gear angled relative to an axis of the electric motor; and
- a position sensor (17) used for determining a position of the movable part (4) of the second electrode;
wherein the said electromechanical linear actuator (10) of the movable part (4) of the second electrode is fixedly attached on the fixed part (3) of the second electrode with a part of the housing of the said electromechanical linear actuator (10) of movable part (4) of the second electrode, in which the electric motor is located;
the rod (11) of the electromechanical linear actuator (10) of the movable part (4) of the second electrode being connected to the movable part (4) of the second electrode and;
the welding gun also comprising a second force sensor (37) configured to measure force on the second electrode.

2. The welding gun according to claim 1, wherein an angle between the axes of the inverted roller-screw gear and the electric motor is right, obtuse or acute.

3. The welding gun according to claim 1 or 2, wherein the rod (11) of the electromechanical linear actuator (10) of the movable part (4) of the second electrode is coaxial or parallel to the movable part (4) of the second electrode.

4. The welding gun according to claim 1 or 2, wherein the movable part (4) of the second electrode is angled relative to the rod (11) of the electromechanical linear actuator (10) of the movable part (4) of the second electrode.

5. The welding gun according to one of the previous claims, further comprising an anti-rotation assembly of the movable part (4) of the second electrode and a channel for cooling fluid that cools the movable part (4) of the second electrode, wherein the channel for cooling fluid that cools the movable part (4) of the second electrode is partially located in the anti-rotation assembly.

6. The welding gun according to claim 5, wherein the anti-rotation assembly comprises two tubes (38) slidably contacting the sleeves (40) and the channel for cooling fluid is partially located in the tubes (38) and openings in the housing (15), wherein the tubes (38) and said openings are parallel to the rod (11).

7. The welding gun according to claim 5, wherein the anti-rotation assembly comprises two projections (51) slidably contacting the housing (15) and the channel for cooling fluid is partially located in the tubes (52) and openings in said projections (51), wherein the tubes (52) and said openings are parallel to the rod (11).

8. The welding gun according to one of the previous claims, wherein the electromechanical linear actuator (8) of the first electrode is fixedly attached relative to the fixed part (3) of the second electrode.

9. The welding gun according to one of the previous claims, wherein the fixed part (3) of the second electrode is angled relative to the movable part (4) of the second electrode.

10. The welding gun according to one of the previous claims from 1 to 9, wherein the movable part (4) of the second electrode is coaxial or parallel to the first electrode (2).

11. The welding gun according to one of the previous claims from 1 to 9, wherein the movable part (4) of the second electrode is angled relative to the first electrode (2).

12. The welding gun according to one of the previous claims, wherein the movable part (4) of the second electrode comprises a mounting base (32) having cylindrical projection, wherein the movable part (4) of the second electrode and the fixed part (3) of the second electrode are connected to each other using the mounting base (32).

13. The welding gun according to claim 1, wherein the second force sensor (37) comprises a resistive-strain sensor or a piezo-electric force sensor mounted to a surface of the fixed part (3) of the second electrode.

14. The welding gun according to one of the previous claims, further comprising a control system having a computation unit to calculate positions of the first electrode (2) and the movable part (4) of the second electrode.

## Patentansprüche

1. Schweißpistole, umfassend:
eine erste Elektrode (2);
eine zweite Elektrode mit einem festen Teil (3) und einem beweglichen Teil (4), wobei der bewegliche Teil (4) der zweiten Elektrode und die erste Elektrode (2) zueinander hin beweglich sind;
einen elektromechanischen Linearantrieb (8) der ersten Elektrode, wobei der elektromechanische Linearantrieb (8) der ersten Elektrode (2) einen ersten Kraftsensor umfasst, wobei eine Stange (9) des elektromechanischen Linearantriebs (8) der ersten Elektrode mit der ersten Elektrode (2) verbunden ist; und **dadurch gekennzeichnet, dass** die Schweißpistole ferner umfasst:
einen elektromechanischen Linearantrieb (10) des beweglichen Teils (4) der zweiten Elektrode, wobei der elektromechanische Linearantrieb (10) des beweglichen Teils (4) umfasst:
- ein Gehäuse (15, 16);
- einen Elektromotor;
- ein invertiertes Rollengewinde-Getriebe zur Umwandlung der Drehbewegung des Elektromotors in eine Translationsbewegung der Stange (11) des elektromechanischen Linearantriebs (10) des beweglichen Teils (4) der zweiten Elektrode;
- ein Kegelradgetriebe (27, 28) zur Übertragung der Drehung des Elektromotors auf das invertierte Rollengewinde-Getriebe;
- wobei eine Achse des invertierten Rollengewinde-Getriebes mit einer Achse der Stange (11) des elektromechanischen Linearantriebs (10) des beweglichen Teils (4) der zweiten Elektrode zusammenfällt und wobei die Achse des invertierten Rollengewinde-Getriebes relativ zu einer Achse des Elektromotors abgewinkelt ist; und
- einen Positionssensor (17), der zur Bestimmung einer Position des beweglichen Teils (4) der zweiten Elektrode dient;
wobei der elektromechanische Linearantrieb (10) des beweglichen Teils (4) der zweiten Elektrode fest an dem festen Teil (3) der zweiten Elektrode mit einem Teil des Gehäuses des elektromechanischen Linearantriebs (10) des beweglichen Teils (4) der zweiten Elektrode angebracht ist, in dem sich der Elektromotor befindet;
wobei die Stange (11) des elektromechanischen Linearantriebs (10) des beweglichen Teils (4) der zweiten Elektrode mit dem beweglichen Teil (4) der zweiten Elektrode verbunden ist und;
wobei die Schweißpistole auch einen zweiten Kraftsensor (37) umfasst, der so konfiguriert ist, dass er die Kraft an der zweiten Elektrode misst.

2. Schweißpistole nach Anspruch 1, wobei ein Winkel zwischen den Achsen des invertierten Rollengewinde-Getriebes und des Elektromotors ein rechter, stumpfer oder spitzer Winkel ist.

3. Schweißpistole nach Anspruch 1 oder 2, wobei die Stange (11) des elektromechanischen Linearantriebs (10) des beweglichen Teils (4) der zweiten Elektrode koaxial oder parallel zum beweglichen Teil (4) der zweiten Elektrode verläuft.

4. Schweißpistole nach Anspruch 1 oder 2, wobei der bewegliche Teil (4) der zweiten Elektrode relativ zur Stange (11) des elektromechanischen Linearantriebs (10) des beweglichen Teils (4) der zweiten Elektrode abgewinkelt ist.

5. Schweißpistole nach einem der vorhergehenden Ansprüche, ferner umfassend eine Anti-Rotations-Baugruppe des beweglichen Teils (4) der zweiten Elektrode und einen Kanal für Kühlflüssigkeit, die den beweglichen Teil (4) der zweiten Elektrode kühlt, wobei der Kanal für Kühlflüssigkeit, die den beweglichen Teil (4) der zweiten Elektrode kühlt, teilweise in der Anti-Rotations-Baugruppe angeordnet ist.

6. Schweißpistole nach Anspruch 5, wobei die Anti-Rotations-Baugruppe zwei Rohre (38) umfasst, die die Hülsen (40) gleitend berühren, und der Kanal für die Kühlflüssigkeit teilweise in den Rohren (38) und Öffnungen im Gehäuse (15) angeordnet ist, wobei die Rohre (38) und die Öffnungen parallel zur Stange (11) verlaufen.

7. Schweißpistole nach Anspruch 5, wobei die Anti-Rotations-Baugruppe zwei Vorsprünge (51) umfasst, die das Gehäuse (15) gleitend berühren, und der Kanal für die Kühlflüssigkeit teilweise in den Rohren (52) und Öffnungen in den Vorsprüngen (51) angeordnet ist, wobei die Rohre (52) und die Öffnungen parallel zur Stange (11) verlaufen.

8. Schweißpistole nach einem der vorhergehenden Ansprüche, wobei der elektromechanische Linearantrieb (8) der ersten Elektrode relativ zum festen Teil (3) der zweiten Elektrode fest angebracht ist.

9. Schweißpistole nach einem der vorhergehenden Ansprüche, wobei der feste Teil (3) der zweiten Elektrode relativ zum beweglichen Teil (4) der zweiten Elektrode abgewinkelt ist.

10. Schweißpistole nach einem der vorhergehenden Ansprüche 1 bis 9, wobei der bewegliche Teil (4) der zweiten Elektrode koaxial oder parallel zur ersten Elektrode (2) verläuft.

11. Schweißpistole nach einem der vorhergehenden Ansprüche 1 bis 9, wobei der bewegliche Teil (4) der zweiten Elektrode relativ zur ersten Elektrode (2) abgewinkelt ist.

12. Schweißpistole nach einem der vorhergehenden Ansprüche, wobei der bewegliche Teil (4) der zweiten Elektrode einen Montagesockel (32) mit zylindrischem Vorsprung aufweist, wobei der bewegliche Teil (4) der zweiten Elektrode und der feste Teil (3) der zweiten Elektrode unter Verwendung des Montagesockels (32) miteinander verbunden sind.

13. Schweißpistole nach Anspruch 1, wobei der zweite Kraftsensor (37) einen resistiven Dehnungssensor oder einen piezoelektrischen Kraftsensor umfasst, der an einer Oberfläche des festen Teils (3) der zweiten Elektrode montiert ist.

14. Schweißpistole nach einem der vorhergehenden Ansprüche, ferner umfassend ein Steuersystem mit einer Recheneinheit zum Berechnen von Positionen der ersten Elektrode (2) und des beweglichen Teils (4) der zweiten Elektrode.

## Revendications

1. Pistolet de soudage comprenant :
une première électrode (2) ;
une seconde électrode ayant une partie fixe (3) et une partie mobile (4), dans laquelle la partie mobile (4) de la seconde électrode et la première électrode (2) sont mobiles l'une par rapport à l' autre ;
un actionneur linéaire électromécanique (8) de la première électrode, dans lequel l'actionneur linéaire électromécanique (8) de la première électrode (2) comprend un premier capteur de force, dans lequel une tige (9) de l'actionneur linéaire électromécanique (8) de la première électrode est reliée à la première électrode (2) ; et **caractérisé en ce que** ledit pistolet de soudage comprend en outre :
un actionneur linéaire électromécanique (10) de la partie mobile (4) de la seconde électrode, ledit actionneur linéaire électromécanique (10) de la partie mobile (4) comprenant :
- un boîtier (15, 16) ;
- un moteur électrique ;
- un engrenage à vis à rouleaux inversés pour transformer le mouvement de rotation du moteur électrique en mouvement de translation de la tige (11) de l'actionneur linéaire électromécanique (10) de la partie mobile (4) de la seconde électrode ;
- un engrenage conique (27, 28) pour transférer la rotation du moteur électrique à l'engrenage à vis à rouleaux inversés ;
- dans lequel un axe de la vis à rouleaux inversée coïncide avec un axe de la tige (11) dudit actionneur linéaire électromécanique (10) de la partie mobile (4) de la seconde électrode et avec ledit axe de la vis à rouleaux inversée incliné par rapport à un axe du moteur électrique ; et
- un capteur de position (17) utilisé pour déterminer une position de la partie mobile (4) de la seconde électrode ;
dans lequel ledit actionneur linéaire électromécanique (10) de la partie mobile (4) de la seconde électrode est fixé sur la partie fixe (3) de la seconde électrode avec une partie du boîtier dudit actionneur linéaire électromécanique (10) de la partie mobile (4) de la seconde électrode, dans laquelle se trouve le moteur électrique ;
la tige (11) de l'actionneur linéaire électromécanique (10) de la partie mobile (4) de la seconde électrode étant reliée à la partie mobile (4) de la seconde électrode et ;
le pistolet de soudage comprend également un second capteur de force (37) configuré pour mesurer la force exercée sur la seconde électrode.

2. Pistolet de soudage selon la revendication 1, dans lequel l'angle entre les axes de la vis à rouleaux inversés et le moteur électrique est droit, obtus ou aigu.

3. Pistolet de soudage selon la revendication 1 ou 2, dans lequel la tige (11) de l'actionneur linéaire électromécanique (10) de la partie mobile (4) de la seconde électrode est coaxiale ou parallèle à la partie mobile (4) de la seconde électrode.

4. Pistolet de soudage selon la revendication 1 ou 2, dans lequel la partie mobile (4) de la seconde électrode est inclinée par rapport à la tige (11) de l'actionneur linéaire électromécanique (10) de la partie mobile (4) de la seconde électrode.

5. Pistolet de soudage selon l'une des revendications précédentes, comprenant en outre un ensemble anti-rotation de la partie mobile (4) de la seconde électrode et un canal pour le fluide de refroidissement qui refroidit la partie mobile (4) de la seconde électrode, dans lequel le canal pour le fluide de refroidissement qui refroidit la partie mobile (4) de la seconde électrode est partiellement situé dans l'ensemble anti-rotation.

6. Pistolet de soudage selon la revendication 5, dans lequel l'ensemble anti-rotation comprend deux tubes (38) en contact coulissant avec les manchons (40) et le canal pour le fluide de refroidissement est partiellement situé dans les tubes (38) et les ouvertures dans le boîtier (15), dans lequel les tubes (38) et lesdites ouvertures sont parallèles à la tige (11).

7. Pistolet de soudage selon la revendication 5, dans lequel l'ensemble anti-rotation comprend deux saillies (51) en contact coulissant avec le boîtier (15) et le canal pour le fluide de refroidissement est partiellement situé dans les tubes (52) et les ouvertures dans lesdites saillies (51), dans lesquelles les tubes (52) et lesdites ouvertures sont parallèles à la tige (11).

8. Pistolet de soudage selon l'une des revendications précédentes, dans lequel l'actionneur linéaire électromécanique (8) de la première électrode est fixé par rapport à la partie fixe (3) de la seconde électrode.

9. Pistolet de soudage selon l'une des revendications précédentes, dans lequel la partie fixe (3) de la seconde électrode est inclinée par rapport à la partie mobile (4) de la seconde électrode.

10. Pistolet de soudage selon l'une des revendications précédentes de 1 à 9, dans lequel la partie mobile (4) de la seconde électrode est coaxiale ou parallèle à la première électrode (2).

11. Pistolet de soudage selon l'une des revendications précédentes de 1 à 9, dans lequel la partie mobile (4) de la seconde électrode est inclinée par rapport à la première électrode (2).

12. Pistolet de soudage selon l'une des revendications précédentes, dans lequel la partie mobile (4) de la seconde électrode comprend une base de montage (32) ayant une projection cylindrique, dans lequel la partie mobile (4) de la seconde électrode et la partie fixe (3) de la seconde électrode sont reliées l'une à l'autre à l'aide de la base de montage (32).

13. Pistolet de soudage selon la revendication 1, dans lequel le second capteur de force (37) comprend un capteur de contrainte résistif ou un capteur de force piézoélectrique monté sur une surface de la partie fixe (3) de la seconde électrode.

14. Pistolet de soudage selon l'une des revendications précédentes, comprenant en outre un système de commande doté d'une unité de calcul pour calculer les positions de la première électrode (2) et de la partie mobile (4) de la seconde électrode.
